# EUROPEAN PATENT APPLICATION

(11) **EP 1 178 669 A1**
(43) Date of publication of application: **06.02.2002**
(21) Application number: 01118244.1
(22) Date of filing: 30.07.2001
(51) Int. Cl.: H04N 1/387, G06T 3/60

(54) **Lossless sending of precompressed data, with adjusted printing parameters, for very large fine-resolution images**

(30) Priority: 01.08.2000 US 629363
(71) Applicant: Hewlett Packard Company, a Delaware Corporation, Palo Alto, CA 94304 (US)
(72) Inventor: Chiarabini, Luca, San Diego, CA 92128 (US); Giménez, Galo, 08013 Barcelona (ES); Vilar, Jordi, 08130 Barcelona (ES)
(74) Representative: Orsi, Alessandro

(57) **Abstract**

Printing is based on lossy-precompressed nontext raster-image data (24, 43), using a Windows® operating system (65). One invention aspect adjusts (44) data without lossy recompression to match file formats the printing device (83) expects. Another aspect passes (55) data to a driver (74) via a "Postscript passthrough" (67) in Windows® . In either case data then go on through Windows to the device, still without lossy recompression. If data (61, 62) are not compressed nontext raster data, these steps are omitted (Fig. 5) and the image sent (61, 63, 66, 71; 62, 64, 68, 72) to the device per steps of an application (32). When used, adjusting also best accommodates (45) desired print parameters, e. g. image rotation, trimming and sizing; number of color planes; and (by color plane) image height and width, and resolution per unit distance. Passing the image to the device best includes sending adjusted precompressed data (53) directly to a printing-device driver (74) and thence to the device. Lossless decompression (41) is best applied to received data, and lossless recompression (51) applied after the transformation and before going to the device. Here if data are JPEG data (DCT coefficients and quantization tables), then between the two lossless applying steps the data (44) are best stored in a temporary file that is not a system swap file. This step best includes exploiting (45) data symmetry to effect an exchange among coefficients, to rotate the printed image. Other aspects are a printing device (83) and driver (74).

## Description

### FIELD OF THE INVENTION

This invention relates generally to machines and procedures for incremental printing of images such as photos on printing media such as paper; and more particularly to methods and apparatus for rapid but high-fidelity transmission of image data to a Postscript® printing device (e. g. printer, copier, or facsimile machine), from an application program running in a Windows® (post3.1) environment. The invention is especially beneficial for printing from extremely large image-data files to produce very big, fine-resolution images.

### BACKGROUND OF THE INVENTION

### (a) Commercial environment ―

The technical environment and the problems described below are important and troublesome in terms of printed-image quality, for essentially any artistic-quality picture. Concerns over quality, however, are severely aggravated by problems with speed ― in other words, throughput ― when the image to be printed is very large.

For example art reproductions of poster size, e. g. 5,000 cm² and larger, have become a significant business. The first four above-mentioned copending patent documents set forth details of one very modern system for secure distribution of copyright-protected images owned by museums and other image proprietors.

In that system a proprietor transmits image information to a printing service provider or "PSP". The PSP maintains an electronic server system that is able to receive the image data and transmit it to a local printing device.

### (b) Technical environment ―

A particularly challenging aspect of such transactions is that poster-size art reproductions correspond to an enormous amount of data at the pixel level. The exact amount naturally depends on exact dimensions as well as other factors; for purposes of discussion here, a generally representative data file is on the order of one hundred megabytes.

Interestingly the primary difficulty with such files is not in Internet transmission from gateway to PSP ― as the amount of data to be transmitted is reduced to tractable levels by image data file compression, using standard procedures such as the Joint Photographic Experts Group (JPEG or JPG) standard. Similarly the actual transmission from a PSP's e-server to its own local printing device can be performed in reasonable time by a like compression available in any of several printer languages, also now relatively standardized as for example in the popular Postscript® language.

Rather the greater challenge arises, curiously enough, at the interface between the long-distance (Internet) transmission and the local (server-to-printer) transmission. As will be seen, the bottleneck here is formed by an odd jumble of data-format incompatibilities, high demands on throughput, extremely high requirements on image fidelity, diverse operating systems and application programs, and finally an overlay of mundane practicalities about image cropping, sizing, and rotation.

Thus image compression has been a persistent problem in the hardcopy industry, and especially important in the large-format segment of that field ― where high-resolution images must be transmitted, processed and printed to obtain acceptable output quality.

### (c) Technical problem: the unexploited "compression coincidence" ―

These problems have been only partially resolved by the invention of new, relatively high-compression algorithms such as "LZW" (lossless) and direct cosine transform or "DCT" (lossy). The terms "lossless" and "lossy" refer to irreversible loss of image-detail information that occurs in some data-compression procedures.

As is well known in this field, such loss is immaterial when data compression is performed properly and just once ― and the data are later extracted or "decompressed" for direct use. If the decompressed data are then recompressed, however, even using precisely the same algorithm and nominally the same compression parameters, interactions or interferences between the two rounds of compression usually arise.

These interferences develop from the fundamental nature of lossy algorithms such as the DCT, which is a mathematically sophisticated procedure generally akin to a Fourier transform ― performed on blocks or tiles of the input image. Spatial frequency content represented by the DCT blocks is distorted by attempts to decompress (i. e. reconstitute) and then recompress the image.

This is particularly so if the division of the image into blocks in the second round of compression is just slightly different from its division in the first round. Hue shifts often result, and more evident mechanical artifacts sometimes arise as well.

Precisely such circumstances are present at the earlier-mentioned interface between long-distance and local transmissions. The root problem is that the file formats used in the long-distance transmission are not exactly the same as the print languages used in the local transmission ― even when the same compression algorithms are used in both segments of the overall data path.

Data must therefore be decompressed, in an effort to recover the original image information from the long-distance-transmitted file, preparatory to recompression as part of the print-language translation. In the interest of avoiding the quality impact of such recompression, some workers have devised very unfavorable solutions ― e. g., transmitting the full uncompressed image to the printing device.

That particular solution is particularly disadvantageous in terms of time, since it calls for transmitting perhaps 50 to 100 Mbytes of uncompressed data. A typical figure representing visually very nearly the same information compressed is on the order of only 2 to 5 Mbytes.

More specifically, the high-compression algorithms mentioned earlier have been separately incorporated into several industry standards that can be seen as two uncoordinated groupings, file formats and print languages ― for instance:

| file formats | print languages |
|---|---|
| JPEG | PCL |
| TIFF | HPGL2 |
| GIF | PS |

(where "PS" stands for the "Postscript" language). In the present document this important fact is called the "compression coincidence".

Although the file formats and print languages thus may use exactly the same compression algorithms, however, they are not compatible. This is because the workers who devised the file formats and print languages failed to coordinate their efforts, and compressed data is therefore embedded in the file and the print language in very different ways.

Thus it is heretofore not possible to directly send a JPEG, TIFF or GIF raster image to a Postscript® device, unless that device explicitly supports these formats as print languages. Some such explicit support efforts (and also some details of the JPEG standard, for reference purposes) will be discussed shortly.

Although possible, it is not common to use a generic Postscript® file for encapsulating a JPEG image, because applications and image viewers in general lack the ability to properly recognize the PS file as a supported format. Previewing and manipulation of Postscript® files is a complex task.

What this comes down to is a matter of industry convention and practice. Postscript® is generally considered to be a "print language" ― not a "portable raster file" such as JPEG, TIFF or GIF ― and as a general matter the industry has not meaningfully addressed this mismatch.

### (d) Details of the JPEG process ―

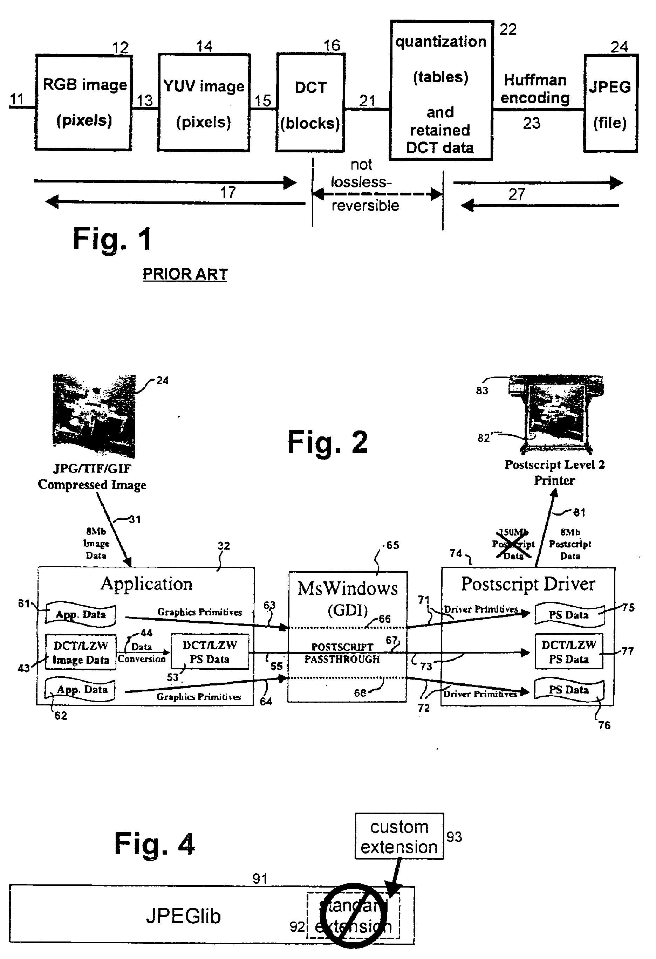

Conventional processes for storing an input image as a JPEG file begin with information from some source 11 (Fig. 1) such as a scanner, digital camera or on-screen original art. This information ordinarily may be represented as an RGB bitmap 12, though it is not necessarily saved in that form as a file.

The bitmap 12 then passes through a conversion process 13 to obtain an equivalent representation 14 in the luminance-chrominance "YUV" space ― familiar in the broadcast video field. Up to this point the data continue to be represented as distinct color-space values associated, respectively, with image pixels.

Next the YUV data are subjected 15 to the discrete cosine transform (DCT) to produce transform values 16 for blocks of pixels. Up to this point, nevertheless, the process is fairly considered reversible ― as suggested by the bidirectional arrows 17.

The transform values 16 are coefficients in a cosine expansion of the original data. Initially, i. e. at this stage, all the coefficients are represented with full precision ― so that the original information could be reconstituted from the values 16 with insignificant loss.

For this reason these initial steps 12-16 are described as "lossless". In the next processing step 21, however, two critical changes occur:
■ the DCT coefficients are analyzed to determine the relative importance of the different coefficients; and
■ based upon this analysis, a very large fraction of the DCT information is usually discarded.

The word "discard" in this context refers to an ingenious process of, in essence, truncation of selected data ― effectively dropping a selected number of less-significant digits in the values that are selected as relatively less important.

Physically, the analysis of the coefficients corresponds to determining the relative importance of the different spatial frequencies in the image. This analysis makes it possible to appropriately retain and discard (in effect by truncation) correspondingly varying fractions of the data for the different frequencies, respectively ― while only minimally impairing visual fidelity of the represented image.

In other words, the data-discarding function is done by correspondingly adjusting the degree of precision with which the different coefficients are stored. Not necessarily entire data values, but more commonly varying fractions of each value, are thus either kept or jettisoned selectively.

The relative-importance determinations are recorded in so-called "quantization tables". These tables enable correct interpretation of the coefficients later, and so make possible a later physically meaningful reconstruction of the picture from the retained DCT coefficients.

After the step 21 that includes the analysis of importance and the truncations of precision, the resulting data 22 consist of the quantization tables plus only the retained portions of the DCT coefficients 16. Since a sizable fraction of the information 16 has now been discarded or lost, the analysis-and-discarding step 21 is described as "lossy".

This step is therefore not completely reversible. This irreversibility is indicated next to the dashed double arrow below.

The amount of compression obtained by this process, however, is very substantial ― usually well above ten percent and often ninety percent and more. Because of the sophisticated selection process nevertheless the image represented by the remaining data 22 is usually visually indistinguishable from the original.

This important assumption has important limitations. For full appreciation of the present invention, it is crucial to recognize that this assumption fails if the spatial-frequency character of the data is not fully respected in all the following processes, particularly including any later attempted decompression and recompression.

The quantization tables, retained DCT data and critical parameters then pass into another compression stage 23 called "Huffman encoding". At this stage an additional, minor amount of data compression ― usually well under ten percent ― is applied. Thus Huffman encoding has been described as akin to zipping the file consisting of the DCT data and tables.

Huffman encoding 23 of the retained DCT coefficients and their corresponding quantization tables produces a finished JPEG file 24. This step 23, like those 11-16 preceding the analysis-and-discarding step 21, is again lossless as suggested by the bidirectional arrows 27.

An additional element of the JPEG file 24 is a critical-parameters block (not shown in Fig. 1) including the number of color planes ― usually either one for a monochrome image, or three for a color image ― and the height and width for each plane, as well as the resolution per unit distance and the overall resolution per plane. As will be seen, these data are best handled somewhat separately from the image information.

While the JPEG system is remarkably effective and useful, the limitations mentioned above are very important when art-quality reproduction work is attempted. This is especially so in the environment discussed earlier, which as already explained presents major problems of data integrity.

### (e) DOS and Unix legacy applications ―

Core concepts applicable to mitigate these problems have been known for many years. Unix and DOS are the oldest operating systems still in general use, and in those systems an application not only can but must generate its own print language if it is to work in conjunction with a printer.

In such an architecture it is straightforward to take advantage of a image file by directly embedding the compressed raster data into print-language output. Because Unix and DOS are legacy operating systems ― or perhaps in some cases due to lack of understanding ― very few DOS or Unix applications known to the present inventors have ever exploited raster-data precompression in sending image files to a printer.

In any event the dominant operating system in the personal-computer industry now is Windows®. Even a DOS or Unix application that included precompressed image data in printer transmissions could not be regarded as representing a viable solution to the needs of the many applications that operate under or interface with Windows® and are called upon to transmit image data to a PS printing device.

### (f) Mainline operating systems ―

The Macintosh® and Windows® operating systems provide print-driver architecture that entitles and enables applications to print while knowing very little about print languages or printing devices. In these systems, to print images, applications send graphics primitives to the operating system, which responds by sending driver primitives to print drivers.

The drivers in turn generate the print language that is eventually sent to the printing device. Such architecture is beneficial, in that it promotes generality and thereby facilitates use of a broad variety of equipment.

It obstructs, however, efficient and faithful reproduction of images based on precompressed image data ― unless:
(1) specifically supported by the operating system,
(2) specifically used by the application, and
(3) specifically supported by the driver. Neither Macintosh nor Windows operating systems have traditionally supported efficient use of precompressed nontext, raster data management. Several applications are capable of printing JPEG, TIFF or GIF files ― but all these applications decompress the data in system memory, forward it through operating-system calls and rely on the print drivers to recompress the raster data before sending it to the printing device.

It is precisely such operation that causes the previously outlined failures of speed and fidelity at the "interface". Among the drawbacks are these:
■ This standard approach incurs a very high performance penalty, because wholly unnecessary complex decompression and then recompression algorithms must be operated in the host computer.
■ Between those steps the data stand uncompressed, and must be managed in that condition ― requiring still further commitment of memory and processing time.
■ The memory requirements for thus manipulating large quantities of uncompressed data usually impact upon the host itself, which often enters swapping mode and in a large fraction of episodes either fails (crashes) entirely or corrupts the data without alerting the user.
■ In some cases more-subtle failures of the host prevent lossy recompression, thus resulting in transmission of essentially full-size files to the printing device at very great expense of time, which is unacceptable to users.
■ Generic print drivers have no information about the nature of the original raster data, and so are never able to rationally decide whether they may safely use a lossy compression scheme (only suited for photograph-like images) or should use a lossless one (good for charts, graphs and text).
■ Even if drivers could safely discriminate photo-like images from other types of raster data, applying lossy compression over a previously lossy-compressed (and decompressed) image does frequently impact print quality. That is, as noted earlier, image defects are introduced by the lossy recompression of once-decompressed data. Setting up compression ratios close to the original ones ordinarily produces unacceptable artifacts and hue shifts. Overall, the usual outcome is that any content which originally was highly compressed requires heavy processing on the host to accomplish the recompression. Yet that compression is often done poorly, impacting performance.

### (g) Direct printer support for precompressed file formats ―

In response to the situation described above, direct support for most common file formats such as JPEG and TIFF has been very recently added to the firmware of high-end printers in the competitive marketplace. These printers are capable of directly accepting and printing TIFF and JPEG files.

Such arrangements theoretically solve the previously described efficiency and quality problems, where there is an interface between long-distance and local transmission for printing. As a practical matter, however, these solutions have very little utility.

The reason is that they provide almost no control over the size, orientation and position of the image as it appears on the printing medium. Most users expect to be able to crop and scale an image, and rotate and translate it relative to the medium.

### (h) Vector graphics and text ―

A particularly strange set of attempts that seem to have gone astray is represented by Adobe PhotoShop® and Corel Draw® for Windows. These applications start out on a very strong footing, partially solving the problems by bypassing the print driver and directly generating a highly compressed print language themselves.

Further, these applications provide a special mode by which they directly generate compressed PS data. What is more, these applications operating in Windows also make use of a special conduit communicating with the printer.

That conduit, known as the "Postscript passthrough", is a standard mechanism that was put in place by Microsoft a number of years ago and hence is supported under all operating systems in the Windows family ― and furthermore has been traditionally supported by all Postscript drivers. This mechanism was in fact originally requested by these same application vendors so that they could directly generate Postscript files, bypassing Postscript drivers.

Although a particularly high motivation for developing the Postscript passthrough was to facilitate sending vector graphics (a primary feature of Corel Draw) and text to the printer, the passthrough has also been effectively used (particularly by PhotoShop) to apply custom color corrections.

These applications are thus off to a superb start. Unfortunately, however, they ultimately fail to exploit these several excellent built-in advantages when dealing with precompressed nontext raster data.

More specifically these applications fail to take advantage of originally precompressed data and hence unnecessarily cause quality degradation during the printing process. PhotoShop, for instance, applies its own DCT compression algorithm over the decompressed data that is loaded in memory ― after reading from the original DCT-compressed file. Corel Draw, when printing vector-graphics files that contain embedded precompressed bitmaps, may store and transmit such included bitmaps uncompressed.

### (i) Latest OS innovations ―

In an effort to overcome these issues, most-recent versions of the dominant operating systems (MacOS8.6 and Windows2000) have introduced mechanisms for use by applications in sending DCT-compressed images through the operating systems. Yet very few applications or drivers use these new features.

PageMaker for the Macintosh is capable of efficiently printing DCT-compressed images with modern Postscript drivers. It has become very popular with PSPs as it accomplishes in perhaps ten minutes what other systems take fifty minutes to do, due to processing and transmission of only 2 Mbytes rather than 200.

Revisions of the Macintosh operating system roughly two years ago permitted this type of operation. Even the most recent versions of PageMaker, however, still fail to provide such capabilities in Windows.

The new mechanisms provided in Windows2000 only support JPEG files. That is, TIFF and GIF data still present the same problems as before.

Furthermore, these developments provide efficient precompressed-data printing only under the newest versions of the corresponding operating systems and print drivers. That is, no workaround mechanism is provided for legacy products.

### (j) Conclusion ―

These handicaps of modern systems, in dealing with precompressed nontext raster data, have continued to impede achievement of rapid but uniformly excellent incremental printing, particularly though not exclusively for very large images. Thus important aspects of the technology used in the field of the invention remain amenable to useful refinement.

### SUMMARY OF THE DISCLOSURE

The present invention introduces such refinement. In its preferred embodiments, the present invention has several aspects or facets that can be used independently, although they are preferably employed together to optimize their benefits.

In preferred embodiments of a first of its facets or aspects, the invention is a method for printing an image, using a Windows® operating system that controls a printing device. The printing is based upon lossy-precompressed nontext raster-image data.

The method includes the step of receiving the lossy-precompressed nontext raster-image data. It also includes the step of adjusting the data to match a file-specification format expected by the printing device.

The adjustment is performed without lossy recompression. Another step is passing the adjusted data through the Windows® operating system to the printing device ― again without lossy recompression.

The foregoing may represent a description or definition of the first aspect or facet of the invention in its broadest or most general form. Even as couched in these broad terms, however, it can be seen that this facet of the invention importantly advances the art.

In particular by interposing a data adjustment but without lossy procedures, the invention can take full advantage of a compression-format coincidence between file format and printing-device language. More specifically the invention takes an opportunity to dovetail the format of the input data to what the printing device requires.

At the same time the invention can be optimized to avoid the several drawbacks of de/recompression, namely quality degradation, massive data-handling requirements, and delay. As to quality, in particular the invention is able to perform significantly better than certain applications that indiscriminately JPEG-reencode the entire document.

Although the first major aspect of the invention thus significantly advances the art, nevertheless to optimize enjoyment of its benefits preferably the invention is practiced in conjunction with certain additional features or characteristics. In particular, preferably the method further includes the step of, after the receiving step, determining whether received image data are compressed nontext raster data.

If so, then the method proceeds with the adjusting and passing steps; and if not, then those two steps are omitted and the image data instead prepared for sending to the printing device according to procedures established in an application program. Either the passed or the prepared image data, respectively, are then relayed to the printing device, and the image printed in the printing device.

Another basic preference is that the adjusting step also accommodate desired printing parameters. In this case one subsidiary preference is that the parameters be data for image rotation, trimming, or sizing ― and another subsidiary preference is that the parameters be the number of color planes; or the image height and width, by color plane; or resolution per unit distance, by color plane.

Yet another basic preference is that the passing step include the substep of using the Postscript® passthrough escape in the Windows® operating system. Still another is that the passing step include the substeps of sending the adjusted compressed image data directly to a printing-device driver, and also transmitting the image data from the printing-device driver to the printing device, for printing. Another is that the receiving, adjusting and passing steps be performed by a printing-control application program.

A further basic preference is to include the steps of, between the receiving and adjusting steps, applying a lossless decompression to the received data; and between the adjusting and passing steps, applying a lossless recompression to the adjusted data. In this case, if the method is for use with image data that are JPEG data having DCT coefficients and quantization tables, it is also preferable that the method include the step of ― between the two lossless applying steps ― storing the DCT coefficients and quantization tables in a temporary file that is not a system swap file.

If a temporary-file storage step is performed ― and if rotation of the image is desired for printing ― then it is still further preferable that the storing step include exploiting symmetries in the data structure to effectuate an exchange among coefficients. Such exchanges, particularly if used to swap coefficients as between vertical and horizontal dimensions in the tables, can have the effect of rotating the image as printed.

Commonly, although not necessarily, these are essentially elementary matrix-rotation processes, achieving rotation without any recomputation of the coefficients themselves. Related minor computations such as rescaling to correct the aspect ratio of the rotated image, may be desired.

In preferred embodiments of a second major independent facet or aspect, the invention again is a method for printing an image based upon precompressed nontext raster-image data. This method uses a Windows® operating system that controls a printing device.

The method includes the step of receiving the precompressed nontext raster-image data. Another step is passing the received data, through the Postscript® passthrough escape in the Windows® operating system, to the printing device.

The foregoing may represent a description or definition of the second aspect or facet of the invention in its broadest or most general form. Even as couched in these broad terms, however, it can be seen that this facet of the invention importantly advances the art.

In particular, by using the Postscript® passthrough the invention invokes a strategy that is good for virtually every kind of originating application program, including legacy code. This is because the passthrough, as previously mentioned, accepts data from almost all types of Postscript® -compatible applications.

Although the second major aspect of the invention thus significantly advances the art, nevertheless to optimize enjoyment of its benefits preferably the invention is practiced in conjunction with certain additional features or characteristics. In particular, preferably the passing step includes no lossy recompression of the received data.

The other preferences noted above for the first main aspect of the invention are applicable here too ― as, for instance determining whether received image data are compressed nontext raster data, and proceeding accordingly. Also as mentioned above it is best that this main facet of the invention be practiced in conjunction with the other major aspects described in this section of the present document.

In preferred embodiments of its third major independent facet or aspect, the invention is a printing device for printing an image on a printing medium, based upon precompressed nontext raster-image data. The printing is under control of a Windows® operating system.

The printing device includes a programmed processor running a Postscript® print-language interpreter. It also includes a data channel for receiving the precompressed nontext raster-image data into the processor.

The data channel is for receiving the image data through the Postscript® passthrough escape in the Windows® operating system. The printing device also includes printing hardware, controlled by the processor, for marking the image onto the medium.

The foregoing may represent a description or definition of the third aspect or facet of the invention in its broadest or most general form. Even as couched in these broad terms, however, it can be seen that this facet of the invention importantly advances the art.

In particular, because the printing-device processor receives data into the Postscript® language and specifically does so through the standard passthrough escape, the printing device is able to receive image data at maximum speed and fidelity, not only from an extremely wide range of applications but also under any of the modern Windows® operating systems including Windows 95, 98, NT and 2000.

Although the third major aspect of the invention thus significantly advances the art, nevertheless to optimize enjoyment of its benefits preferably the invention is practiced in conjunction with certain additional features or characteristics. In particular, preferably the receiving channel includes a printing-device driver. The driver operates in the Windows® operating system and receives the precompressed nontext raster-image data through the Postscript® passthrough escape ― and transmits the image data to the printing device.

In preferred embodiments of its fourth major independent facet or aspect, the invention is a Postscript® printing-device driver. It is for running in a Windows® operating system that manages a computer host, and for controlling a printing device to print images.

Once again the printing is based upon precompressed nontext raster-image data. The driver includes nonvolatile memory holding the driver in the computer host.

Also included is a first data channel for receiving the precompressed nontext raster-image data through the Postscript® passthrough escape in the Windows® operating system. In addition the driver includes a second data channel for sending the received data to the printing device.

The foregoing may represent a description or definition of the fourth aspect or facet of the invention in its broadest or most general form. Even as couched in these broad terms, however, it can be seen that this facet of the invention importantly advances the art.

In particular, the combination of the basic driver, its particularly versatile data channels, and the flow of precompressed, nontext raster-image data provides an extremely robust information-management facility. That is, the capability of a PSP using this overall driver architecture is extraordinarily resistant to variation in upstream application software, in downstream hardware, and in the image-data source as well.

Although the fourth major aspect of the invention thus significantly advances the art, nevertheless to optimize enjoyment of its benefits preferably the invention is practiced in conjunction with certain additional features or characteristics. In particular, preferably this fourth aspect of the invention is practiced in conjunction with the first three main facets of the invention discussed above.

All of the foregoing operational principles and advantages of the present invention will be more fully appreciated upon consideration of the following detailed description, with reference to the appended drawings, of which:

### BRIEF DESCRIPTION OF THE DRAWINGS

Fig. 1 is a diagram showing conventional processes used to produce, from an ordinary image-data bitmap file, a representative precompressed image-data file such as is received by the present invention ― or by other systems, discussed in the "BACKGROUND" section of this document;
Fig. 2 is an apparatus and flow diagram, somewhat schematic, showing an overview of the present invention;
Fig. 3 is a like diagram but much more detailed and focusing upon the Fig. 2 "application" block 32;
Fig. 4 is a very conceptual diagram suggesting the nature of certain modifications to the JPEG standard that are preferred in practice of the present invention; and
Fig. 5 is a diagram generally like Fig. 3 but focusing upon desired program bypass paths in event that no rotation or large-image swap file, respectively, is needed.

### DETAILED DESCRIPTION OF THE PREFERRED EMBODIMENTS

### 1. OVERVIEW

Preferred embodiments of the invention take advantage of the "compression coincidence" described in the "BACKGROUND" section of this document, overcoming the incompatibility problem and making it possible to efficiently print highly compressed raster images. The solution successfully prints JPEG, TIFF and GIF files, but is usable for other formats as well.

Especially in the areas of large-format printing, preferred embodiments of the invention have proved to yield an extraordinary performance improvement over the standard approaches used by Windows applications. These embodiments avoid running any complex decompression algorithm ― or any complex or lossy recompression ― by sending to the printing device the bulk of the data in its original compressed format.

No high processing power is required in the host (application or driver), and little bandwidth is required for data transfer. Hence the solution is especially well suited for high-volume, print-on-demand production ― for which it provides maximum throughput limited only by the power of the hardcopy device.

By means of the preferred embodiments, professional high-resolution raster files in JPEG, TIFF and even GIF format are efficiently printed by any current Postscript level-2 driver. That is true under any version of the Windows operating systems (above Windows 3.1).

In either the standard Windows approach or with the present preferred embodiments, to print an original precompressed 2 Mbyte JPEG raster file the first step is to open that original precompressed file in an application. In other words, that original 2 Mbytes must be loaded in memory. Then these data are Huffman-decompressed (as will be recalled this is a reversible, lossless process) ― and at the end the output will be Huffman-recompressed.

Between the two relatively trivial Huffman stages, however, there is a great difference in the two procedures. In the standard Windows approach, to print that file the intervening steps are to:
■ JPEG-decompress, placing perhaps 100 Mbytes in memory,
■ generate Postscript output ― lossy recompress, introducing hue shifts and other image artifacts while placing 200 to 300 Mbytes in memory or disc, and
■ send to the printing device ― input/output, data transfer of 50 to 100 Mbytes.

With the present invention, in comparison, to print the same file the intervening steps are only to:
■ generate Postscript output ― convert, processing only the original and converted 2 to 4 Mbytes in memory or disc, and
■ send to the printing device ― input/output, data transfer of 2 Mbytes.
   Not only are the time-consuming, bandwidth-demanding decompression and recompression steps omitted, and not only are the memory and disc-storage requirements smaller by more than an order of magnitude, but in addition the adverse image-quality effects are entirely avoided.

The original highly precompressed data are neither decompressed nor subjected to a lossy recompression. Instead they are only converted and then directly embedded into the print-driver output.

The conversion involves no interpretation or reevaluation of the DCT coefficients or quantization tables (described in the earlier "BACKGROUND" section). Rather, those data blocks are at most rearranged ― in event of a required rotation, as will be explained below.

Processing power requirements in the host are greatly reduced by avoiding the JPEG decompression and recompression. Both input and output data rates are boosted by the lossy-to-lossless compression ratio of the original raster data.

These improvements reduce the overall printing time because Postscript printing devices start printing only after having completely received the job. Operation of the invention, moreover, has absolutely no degrading effect upon print quality ― because it does not tamper with the original image through application of any lossy algorithm..

The preferred embodiments are entirely device-independent. Moreover, all Postscript driver settings such as color adjustment, hardcopy limits, job settings etc. are preserved.

### 2. POSTSCRIPT DATA MATCH AND PASSTHROUGH

Preferred embodiments efficiently print original DCT or LZW compressed files such as JPEG, TIFF, GIF etc. The invention exploits the fact that fundamentally the same compression algorithms are being used in these file formats as in the standard Postscript Print Language (level 2 and higher).

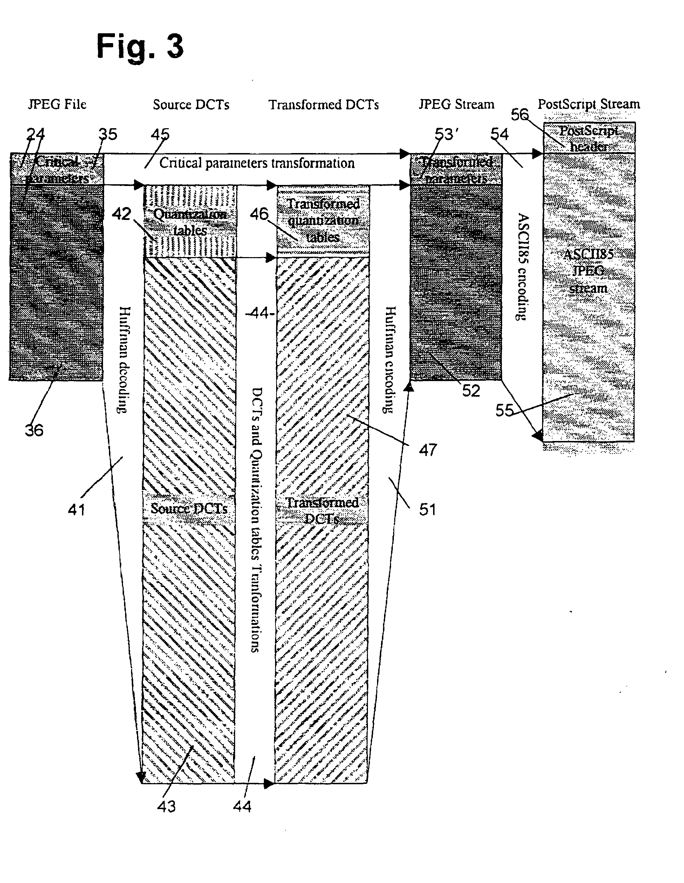

An application 32 (Fig. 2) according to preferred embodiments of the invention reads in 31 the data ― e.-g. a JPEG or like precompressed file 24 initially prepared as in Fig. 1. This file includes image data 43 ― corresponding generally, in the case of a JPEG file, to the quantization tables and retained DCT data 22 of Fig. 1.

Such a file also contains markers, which are parsed by preferred embodiments of the invention. Unimportant markers are filtered out.

Next the system properly adjusts 44 the image data 43 to product a simply reformatted version 53 that matches the Postscript language specification. This is a data conversion process, far more efficient than either a full decompression or recompression of the original precompressed raster data 24, 43.

The preferred embodiments use the special Windows escape 55, 67, 73 ― a feature which in coding syntax is named "POSTSCRIPT_PASSTHROUGH", and which has been introduced in the "BACKGROUND" section of this document. Preferred embodiments use the passthrough escape to directly send the converted compressed raster 53 for receipt 77 by any generic Postscript driver 74.

The passthrough escape is available in all modern unabbreviated versions of Windows to date. By this is meant all versions after Windows 3.1, except current abbreviated operating systems such as Windows CE for miniature products including so-called "palm" units.

The driver 74 then relays 81 the converted compressed raster 53 to the printing device 83, for use in generating a highest-quality hardcopy color printout 82. Related data are sent with the converted compressed raster.

While the invention thus exploits the passthrough 65 for efficiently printing originally DCT or LZW precompressed data 24, 43, 53, it does not bypass the standard Windows and Postscript driver path 74, 81. In fact, certain standard graphics primitives 63 and driver primitives 64 are used to print any nonraster data 61 such as text or vector-image information. Similarly standard graphics and driver primitives 64, 72 are used for printing any uncompressed raster data 62.

For this purpose, the graphics primitives 61, 64 are processed at 66, 68 by the Windows core 65 and eventually delivered to the corresponding Postscript drivers 75, 76 properly converted into the driver primitives 71, 72. The graphics primitives 63, 64 are basically the same for Windows 95 and 98 as in Windows NT; however, the driver primitives 71, 72 in these two basic platforms are completely different.

In any case the Windows Postscript driver ultimately translates all the driver primitives 71, 72 into valid Postscript data for transmission 81 to the printing device 83. These data 81 will also carry, embedded with them, any precompressed data 73, 77 coming from the JPEG, TIFF or GIF files.

All PS-driver-controlled settings such as color adjustments, clipping (cropping) limits, device-specific features etc. are completely preserved ― even if using the passthrough. As a general rule, however, in use of the preferred embodiments Postscript code generated by the driver is not of interest, because the only feature needed is the passthrough 67 ― i. e., a way to insert the Postscript code 53, 55 generated by the application 32.

### 3. PROCESSING WITHIN THE APPLICATION

The procedures 44, 63, 64 of the application 32 bear further explanation. As mentioned in the "BACKGROUND" section, the JPEG file 24 as loaded 31 into the application contains not only image data 22 (Fig. 1) but also several parameters critical to fundamental layout of an image. Thus the file 24 may be roughly conceptualized as having a small critical-parameters block 35 (Fig. 3) heading the bulk of the data 36.

The small header 35 is read directly into a transformation process 45. This process merely corrects the dimensions and the resolution values if an image is to be rotated e. g. ninety degrees, or trimmed, for printing.

Such simple rotations are often called for to match the image shape to the page shape. As to rotations, only very simple exchanges of numbers ― or, to put it differently, reidentifications of numbers ― are needed to account for the exchange of height with width in the common rotations.

The rest of the file, corresponding generally to the image data 22, is Huffman-decoded 41 ― this, like the Huffman encoding 23 (Fig. 1), being a lossless process ― to extract the quantization tables 42 and the source DCT coefficients 43 (16 in Fig. 1). The coefficients often require sizable memory, and in such circumstances standard JPEG protocols call for a swap to disc in whatever way the operating system permits.

Conventionally this swapping function is implemented by use of a so-called "system swap file". That is to say, the contents of the volatile working memory in the host are conventionally stored in ― or, in programmer jargon, "mapped over" ― a nonvolatile memory such as a hard-drive file. Usually such a file is created automatically by the operating system, upon detection of any application's need for such assistance.

In Windows NT, however, the system swap file does not grow as needed for extremely copious data. Hence, preferred embodiments of the present invention instead map the coefficients over a temporary nonsystem file.

In addition to resolving the special requirements of NT this approach provides significant benefits for other Windows versions, which present a different sort of obstacle to system swap-file use. NT, while offering inadequate swap-file growth, does supply swap-file access that is asynchronous ― so that the whole system need not wait while an application transfers data into or from a file.

In Windows 95 and 98, however, swap-file access is exclusively synchronous, and this bottleneck is aggravated by a bug in file mapping. In this environment a better approach, to work around the bug, is a swap to the temporary nonsystem file.

In currently favored embodiments, this temporary storage is preferably in a so-called "memory mapped" type of file. Future implementations may instead use a temporary file that is not a memory-mapped file ― so that the temporary storage is less dependent upon the operating system and is more self contained and portable.

Where the temporary storage is to a memory-mapped file, sound practice of preferred embodiments of the invention includes custom management of the file mapping. Although this is readily accomplished in a straightforward way that will be clear to those of ordinary skill in the programming art, subsection 5 below offers some further comment particularly for orientation of the neophyte.

The DCT coefficients are next processed 44 for rotations ― if called for in preparation for printing ― and trimming. Simple image rotations through e. g. ninety degrees correspond to very simple matrix rotations, aided by well-known symmetries in matrix mathematics.

By virtue of these special symmetries, if rotation is required (to match image shape to page shape for instance) it can be accomplished merely by rearranging, rather than recalculating, the coefficients. In other words, essentially all that changes is the sequence, not the values, of the coefficients.

This is essentially only a more-elaborate analog of the previously mentioned exchange of height and width in the critical-parameter block, as will be clear to programmers and mathematicians skilled in the field of matrix manipulation. Further details, however, will be presented shortly.

With the elementary rearrangements or reidentifications required for rotations and like simple modifications must also go a corresponding rearrangement or reidentification of the respective values in the quantization tables 42, yielding a revised tabulation 46. Of course no DCT decompression/recompression is needed in such arithmetic, and this procedure is accordingly lossless.

The transformed DCT and quantization data 47, 46 are then Huffman-encoded 51 again. The result is a new compressed DCT/quantization stream 52, with the accompanying transformed critical parameters 53'.

If no rotation or other transformation is to be applied to the image in a particular printing project, then in principle the Huffman extraction and reencoding of the DCT coefficients are not required. The now-preferred embodiments of the invention nevertheless perform these steps in every case, simply because they are called by the exemplary code in the JPEG library promulgated by the Independent JPEG Group ― discussed in subsection 4, below.

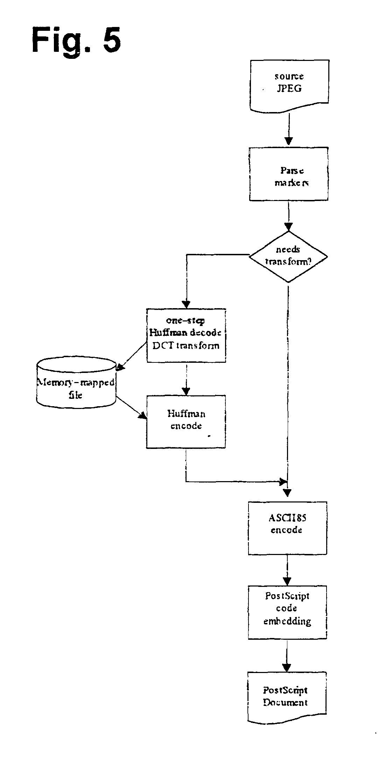

These Huffman steps are somewhat expensive in time and memory terms, and therefore in this particular environment would be better skipped (Fig. 5), just as swap to disc may be omitted if volatile memory is adequate to hold the entire image file. Revision of the application code to accomplish this is relatively straightforward but has not yet been completed.

The dual DCT/parameters stream 52, 53' is next subjected to ASCII85 encoding 54, which expresses the data in a base-85 system that is one format anticipated by the printing device, and is more compact. A primary reason for use of the base-85 encoding, however, is that it eliminates virtually all resemblance to the most common kinds of text-command syntax that are known to the following stages 74, 81, 83 in the system.

The encoding thereby effectively insulates the data against erroneous editing attempts that may occasionally arise in those stages. In other words, the base-85 encoding guards against file corruption by misguided operating-system or driver efforts to reformat what may appear to be text.

Also prepared in parallel by the application 32 is a Postscript header 56. It is written in the Postscript language to call a function that finds the image and inserts it into a page.

The ASCII85-encoded stream 55, together with the header 56, is embedded in a Postscript script which prints the image at the proper position and size in the page. This script 55, 56 can be inserted in any thirty-two-bit Windows printing job through the passthrough escape 67 (Fig. 2), generally as described in subsection 2 above.

Inappropriate interference from the Windows GDI 65 during passthrough, or from the driver 74, is avoided by two factors. First, the ASCII85 encoding encapsulates the data in a graphics-preserving form, as noted above. Second, all symbols used are isolated in a temporary environment, which in Postscript is called a "dictionary".

By virtue of this private dictionary and preservation of all graphic states, many objects can be sent through the GDI path or passthrough without collisions. The script 55, 56 therefore can be freely and yet safely merged with normal printing operations.

### 4. REPRESENTATIVE SYNTAX OF TRANSFORMATIONS

Programming for practice of the invention is not trivial but also is a less than monumental task, thanks to the excellent public-domain materials provided by the Joint Photographic Experts Group ― particularly the Independent JPEG Group (IJG) as well as the International Standards Organization (ISO). Explanatory reference text files include "IJG JPEG LIBRARY: SYSTEM ARCHITECTURE" and its accompanying "README" file, copyright Thomas G. Lane; "JPEG FILE INTERCHANGE FORMAT", Eric Hamilton, C-Cube Microsystems; and "INFORMATION TECHNOLOGY ― DIGITAL COMPRESSION AND CODING OF CONTINUOUS-TONE STILL IMAGES ― REQUIREMENTS AND GUIDELINES", International Telegraph and Telephone Consultative Committee (CCITT).

IJG materials include a code library that is known as "JPEGlib" and may be regarded as a sort of informal standard library; in particular, current preferred embodiments of the present invention use some code modules either drawn or adapted from IJG JPEG Library 6b. An appendix to that library is a stand-alone utility known as "JPEGtran" for common transformations such as matrix rotations 44.

More specifically, when page and image orientations do not match, usually a ninety-degree clockwise rotation of the image is favorable. This corresponds to a counter-clockwise rotation of two hundred seventy degrees, and angles are traditionally measured positive in the counter-clockwise direction.

Hence syntax selected from JPEGtran for page-orientation matching, in some recent preferred embodiments of the invention, is "do_rot_270". Associated syntax for the corresponding rearrangement of the critical parameters is "transpose_critical_parameters".

Most-current preferred embodiments of the invention, however, perform rotations internally to the application 32 ― by applying the matrix arithmetic to exchange coefficients as mentioned earlier ― rather than by using the code module do_rot_270 for instructing the printing device to perform the rotations. Each of these strategies is workable, but performance internally within the application 33 is now a highly preferred form of the present invention.

Thus rotation within the application 33 is not merely routine design, but rather is preferred after being found to provide unexpected advantages ― both in smoothness of interaction with some versions of Windows and more importantly in terms of overall throughput and efficiency. Similarly, use of transpose_critical_parameters is a preference rather than an absolute requirement.

Thus preferred embodiments of the invention either use these informal-standard protocols or in some cases adapt them to optimize dovetailing with the GDI 65 and particularly the passthrough 67. Materials in the library are essentially just examples that may be used or adapted within preferred practice of the invention. (Mirroring and grayscale interpretations also appear in JPEGtran, but in preferred embodiments need not be used.)

JPEGlib 91 (Fig. 4) also includes a standard memory-mapping extension 92. For reasons suggested earlier, however, this standard module is preferably replaced by a custom extension 93 that substitutes a nonsystem, asynchronously accessed swap file for the conventional Windows system swap file.

The library contains no provision for automatic exchange between source and destination files, i. e. for causing a single file to act as both source and destination. Such operation, however, is useful when the amount of image data is extremely large ― to avoid the possibility of exhausting nonvolatile storage resources of the system.

In the case of ninety-degree rotations such automatic exchange is very readily accomplished, once again by virtue of the simplicity introduced by symmetries of DCT-coefficient exchange that implement ninety-degree rotations. In particular this does not represent a major added effort since the current preferred embodiment includes establishing a nonsystem swap file anyway to provide asynchronous access as explained earlier. Some additional details will be presented shortly.

In addition, Adobe's Postscript language include a so-called "filter" that includes the useful functions "DCTencode" and "DCTdecode". Portions of this filter can be adapted for the Huffman and ASCII85 steps 41, 51, 54 discussed above ― but more particularly for use by the printing device 83 in decoding the final Postscript script 81.

In the course of work to implement the invention in Windows, various awkward environments and a few bugs have been encountered and overcome. In particular, it was initially planned to send files to the Postscript driver 74 without rotation to match page shape ― but with instructions to the driver to perform the rotation.

Conceptually that is the best technique, with all JPEG processing being done in the high-performance printing device. In practice, however, performance of older versions of PS printing devices are very unacceptable in this regard.

Therefore, as already suggested in earlier sections, the custom application 32 exchanges DCT coefficients (not the image pixels, but the JPEG coefficients) before forwarding them through the passthrough 65 to the driver 74 and printing device 83. This technique achieves a two- to tenfold increase in throughput.

As to trimming, on the other hand, an earlier and very straightforward strategy called for cropping image edges in the custom application 32 ― but for an unknown reason the PS driver rejects the resulting trimmed file, even though direct tests confirm that the file is valid. Accordingly preferred versions of the invention instead send the untrimmed file to Postscript with instructions for trimming, and this approach has proven successful.

In implementing the preferred embodiments of the invention, it is necessary to detect whether the driver and printing device are Postscript and support the passthrough ― and how to send the code. Microsoft documentation offers two methods, both sending the code as an escape to the driver.

One of these works for Windows 3.x (16-bit drivers) and the other for Windows NT (32-bit drivers). Windows 95 and 98 are said to use 16-bit drivers, but the corresponding drivers when tested worked in the same way as the NT driver. It is tentatively supposed that all drivers from Adobe work in that same way.

As mentioned earlier, code for implementing preferred embodiments of the invention is largely based on the IJG library. The structure of this library is not entirely suitable here because it is based on compressor and decompressor objects, treated as different, and in some cases this is an expensive overhead.

The main differences in the code are in the management of the DCTs: in the library they are treated in a generic and portable way, reading the whole array of DCTs into a called virtual-array in one step and then applying the transformation later. For large images this transformation is very time expensive because the array is in a hard disc and ― as noted earlier ― in rotated images the DCTs are stored in a different order, so the code must "walk" by the disc.

The transformation tool provided with the library (JPEGtran) first uncompresses the whole array of DCTs into the virtual-array, then transforms it, and finally recompresses the array. This procedure is very memory-expensive because it needs two copies of the array: the source copy (holding the original image, used by the decompressor object) and the target copy (accumulating the transformed image, and used by the compressor object). It is also time-expensive because it must traverse the entire array three times.

In the preferred embodiments, instead the DCTs are read, decoded, decompressed, transformed and stored in the transformed position in the memory-mapped file ― all in one single per-row step. The biggest images can be treated in this way, limited only by disc space.

When the whole image has been thus processed, what is stored in the disc is the transformed image. Therefore the next step is to simply read that temporary memory-mapped file sequentially and Huffman encode it.

The algorithms are the same as provided in JPEGtran for doing the transformations, but used in a smart context (i. e. while decompressing). The routine for DCT coefficient extraction is an enhanced version of the library one, that makes the transformations on-the-fly.

Finally, the memory manager has been rebuilt to support memory-mapped files, preserving the interface of the library built-in memory manager. Those of ordinary skill in the art of programming will find this straightforward; however, additional orientation that may be helpful appears in subsection 5, below.

Finally, as noted earlier the resultant file is ASCII85 encoded. Also added at this point is a PostScript JPEG so-called "decoder" code, to be embedded into the PostScript stream being generated by the driver.

This PostScript decoder, provided to enable the printing device to decode the image, is quite simple. When later called in the printing device, the decoder:
■ creates a dictionary as temporary workspace;
■ saves the graphics state of the PostScript engine in the printing device;
■ uses the ASCII85 filter and the DCTDecode filter to decode the data;
■ renders the image, placed at the specified coordinates and with the specified size, aspect ratio and orientation;
■ restores the graphics state (saved three steps earlier) of the engine; and
■ leaves the dictionary.
(In these steps, the reference to "orientation" refers to rotation through any, arbitrary angle. Such rotation, however, is not recommended because it is very time expensive; as mentioned earlier, rotations through multiples of ninety degrees are done already in the application 32.)

This PostScript decoder is self-contained and ― like the other elements of the Postscript stream 55, 56 mentioned previously ― can be freely merged with the driver PostScript code 71-73, 81. Therefore the features of the preferred embodiments do not impair the ability of the application to use the GDI 65 for all other operations.

### 5. PROGRAMMER NOTES

Programming in C or C++ with the system tools known as "MemoryMappedFiles" is a basic skill of the Win32 programmer. It is generally needed Win32 programming knowledge, and well explained in MSDN with several examples.

The memory-manager interface of the JPEGtran library fits well with the use of memory-mapped files because the requests are done by large blocks that can be mapped into views of the mapped file. As indicated earlier, it is straightforward.

For most programmers who are experienced, the comments here will be superfluous - but this orientation may be helpful for some relative newcomers. The basic topic is the manner of conducting intermediate or temporary image management.

In Windows, the operating system provides (serves) memory to the applications (clients). This memory is mapped to the system swap file: there is only one such file, or one per physical disc.

This system swap file is not accessible directly by the applications. Only the system can access it.

In order to use it indirectly, applications must use some of the so-called "heap API" functions. These include the functions "malloc" and "free" from a standard C library; and functions called "Virtualxxxxx", "Localxxxxxx", "Globalxxxxx", "Heapxxxx", etc. from the Win32 API.

When an application uses large amounts of memory, the system uses correspondingly large amounts of space in the system swap file. The libraries use the memory in this way, allocating memory using e. g. the C standard library "malloc" and "free" functions.

The library also provides memory mapped into a temporary file, but using the file system. This is acceptable for systems with short physical memory and asynchronous file systems.

It is not, however, the best method for Windows 95 or 98 because their file system is synchronous. That is, when an application invokes some file system function, the system blocks until this request is satisfied. Therefore if the application spends a lot of time accessing the disc, then ― with large files ― all or nearly all of the CPU time is lost in waiting for the disc.

The approach used in current preferred embodiments of the present invention is a mix of previous techniques: it uses memory-mapped nonsystem files. These represent memory which the system treats as virtual memory but is not mapped to the system swap file.

In Windows NT, 2000, 98 and 95 these memory-mapped files are accessed asynchronously. Such memory access, however, is not provided through the above-mentioned common C API routines (malloc and free).

Therefore the memory manager provided by the standard libraries must be replaced by a custom-built memory manager. That is, the library modules are modified to call the custom manager instead of the standard manager ― but naturally the standard manager is left in place for use by other applications. When called, the custom manager accepts the same requests from the modified library modules but redirects the requests to the memory-mapped file functions in the Win32 API.

As mentioned earlier, it is necessary to work around a bug in Windows 95 and 98. The problem and recommended strategy are set out by Microsoft in a KB: "Windows Development", with the title "BUG: Creating File Mapping Objects Using the Same File Handle Will Cause a File to Be Inaccessible, ID: Q230606."

Each time the library requests more memory, the file is opened and grown, and the previous FileMapping object is closed. A new FileMapping object is created, and the file is closed again. The file is opened with read/write shared mode, which is somewhat risky: in this area, appropriate but routine care is advised.

The above disclosure is intended as merely exemplary, and not to limit the scope of the invention ― which is to be determined by reference to the appended claims.

## Claims

1. A method for printing an image based upon lossy-precompressed nontext raster-image data (24), using a Windows® operating system (65) that controls a printing device (83); said method comprising the steps of:
receiving (31) the lossy-precompressed nontext raster-image data (24, 43);
adjusting (44) the data, without lossy recompression, to match a file-specification format expected by the printing device (83); and
passing (55, 67, 73) the adjusted data (53) through the Windows® operating system to the printing device without lossy recompression.

2. The method of claim 1, further comprising the steps of:
after the receiving step, determining (Fig. 5) whether received image data are compressed nontext raster data (43), and:
if so (43), then proceeding with the adjusting and passing steps (Fig. 3), and
if not (61, 62), then omitting (Fig. 5) the adjusting and passing steps, and instead preparing the image data for sending (61, 63, 66, 71; 62, 64, 68, 72) to the printing device according to procedures established in an application program (32);
then relaying to the printing device the passed or prepared image data; and
then printing the image (82) in the printing device.

3. The method of claim 1, wherein:
the adjusting step also accommodates (45) desired printing parameters.

4. The method of claim 3, wherein the parameters are selected from the group consisting of:
rotation of the image;
trimming of the image;
sizing of the image;
number of color planes;
image height and width, by color plane; and
resolution per unit distance, by color plane.

5. The method of claim 1, wherein:
the passing step comprises the substep of using a Postscript® passthrough escape (67) in the Windows® operating system.

6. The method of claim 1, wherein the passing step comprises the substeps of:
sending (73) the adjusted compressed image data (53, 55) directly to a printing-device driver (74); and
transmitting (81) the image data from the printing-device driver to the printing device, for printing.

7. The method of claim 1, further comprising the steps of:
between the receiving and adjusting steps, applying a lossless decompression (41) to the received data; and
between the adjusting and passing steps, applying a lossless recompression (51) to the adjusted data.

8. The method of claim 7, for use with image data that are JPEG data having DCT coefficients (43) and quantization tables (42); and further comprising the step of:
between the two lossless applying steps, storing such DCT coefficients and quantization tables in a temporary file that is not a system swap file.

9. The method of claim 8, wherein the storing step comprises:
exploiting (45) symmetries in the data structure to effectuate an exchange among coefficients that will rotate the image as printed.

10. The method of claim 1, wherein:
the receiving, adjusting and passing steps are performed by a printing-control application program (32).

11. A printing device for printing an image on a printing medium under control of a Windows® operating system (65), based upon precompressed nontext raster-image data (24, 43); said printing device comprising:
a programmed processor running a Postscript® print-language interpreter (74);
a data channel (55-67-73) for receiving the precompressed nontext raster-image data into the processor through a Postscript® passthrough escape (67) in the Windows® operating system; and
printing hardware (83), controlled by the processor, for marking such image onto the medium (82).

12. The printing device of claim 11, wherein the data channel comprises a printing-device driver (74):
operating in the Windows® operating system and receiving the precompressed nontext raster-image data through the Postscript® passthrough escape; and
transmitting (81) the image data to the printing device.

13. A Postscript® printing-device driver (74) for running in a Windows® operating system (65) that manages a computer host, and for controlling a printing device (83) to print images (82) based upon precompressed nontext raster-image data (24, 43); said driver comprising:
nonvolatile memory holding the driver in such computer host;
a first data channel (73) for receiving such precompressed nontext raster-image data through a Postscript® passthrough escape (67) in such Windows® operating system; and
a second data channel (81) for sending the received data to such printing device.
